# EUROPÄISCHE PATENTSCHRIFT

(11) **EP 2 713 084 B1**
(45) Veröffentlichungstag und Bekanntmachung des Hinweises auf die Patenterteilung: **10.12.2014**
(21) Anmeldenummer: 12186615.6
(22) Anmeldetag: 28.09.2012
(51) Int. Cl.: F16K 17/34, F16K 17/36, F16K 31/08, F16K 51/02, H02K 7/02

(54) **Vakuum-Sicherheits-Verschlusssystem**
Vacuum safety closure system
Système de fermeture de sécurité sous vide

(43) Veröffentlichungstag der Anmeldung: 02.04.2014
(73) Patentinhaber: Enrichment Technology Company Ltd., 52409 Jülich (DE)
(72) Erfinder: Schäfer, Christoph, 52072 Aachen (DE); vor dem Esche, Rainer, 52525 Heinsberg (DE)
(74) Vertreter: Raasch, Detlef

(56) Entgegenhaltungen:
- JP-A- 2002 061 761
- US-A- 2 654 388
- US-A- 4 353 390
- US-A- 4 844 113
- US-A- 5 704 385

## Beschreibung

### Gebiet der Erfindung

Die Erfindung betrifft ein Vakuum-Sicherheits-Verschlusssystem für kinetische Energiespeicher, insbesondere für Schwungradmaschinen.

### Hintergrund der Erfindung

Die Schwungradspeicherung ist eine Methode der mechanischen Energiespeicherung. In einer Maschine befindet sich ein Schwungrad, das auf eine sehr hohe Drehzahl beschleunigt wird, womit Energie als Rotationsenergie gespeichert wird. Um die gespeicherte Energie zurückzugewinnen, wird das Schwungrad abgebremst. Dazu ist in einem typischen System das Schwungrad mit einer Elektromotor-Generator-Kombination verbunden. Um den Speicher aufzuladen, wird das Schwungrad über den Elektromotor in Bewegung gesetzt. Eine hohe Drehzahl entspricht dabei einer hohen Rotationsenergie. Mittels eines angeschlossenen Generators kann diese Energie bei Bedarf wieder in elektrische Energie umgewandelt werden. Das Schwungrad gibt dabei seine kinetische Energie an den Generator ab. Das Schwungrad wird auch als Rotor bezeichnet.

Die durch die Generatordrehung induzierte Spannung stellt die Rückgewinnung der Energie dar. Ältere Systeme wiesen große Nachteile durch eine hohe Selbstentladung (ca. 50 % in ca. 1 h) auf, die durch die Reibung in der Luft und Reibungsverlust des Lagers begründet war. Die Schwungräder älterer Systeme waren aus Stahl gefertigt und wiesen ein hohes Gewicht auf. Für die Speicherung von 10 kWh wurden ca. 1,6 t Schwungradmasse benötigt. Ein Schwungrad eines fortgeschrittenen Systems hingegen, wie es beispielsweise in der internationalen Offenlegungsschrift WO 9624981 A1 beschrieben ist, wird aus Kohlenstofffaser-Verbundwerkstoffen gefertigt und rotiert je nach Bauart mit 20.000 bis über 50.000 Umdrehungen/min. Für die Speicherung einer Energie von beispielsweise 5 kWh benötigen fortschrittliche Schwungräder eine Masse von nur noch ca. 60 kg. Um die Reibungsverluste gering zu halten, werden luftleere Gehäuse und Magnetlager verwendet. Dabei rotiert das Schwungrad in einem evakuierten Gehäuse, das über ein Vakuumsystem, enthaltend mindestens eine Vakuumpumpe und eine Verrohrung, evakuiert wird. Solche Systeme können in wenigen Sekunden bis Minuten voll aufgeladen werden.

Hier und im Folgenden wird unter Vakuum und evakuiertem System oder evakuiertem Hohlkörper wie Gehäuse oder Rohr nicht nur der Zustand eines absoluten Vakuums, sondern jeder Zustand verstanden, bei dem in dem System oder dem Hohlkörper ein Druck unterhalb des Umgebungsdrucks herrscht.

Im Falle eines Fehlers in der beschriebenen Schwungradmaschine, wie beispielsweise das mechanische Versagen einer Rotorkomponente oder das Versagen einer elektromechanischen Komponenten, wie einem Magnetlager, kann es durch mechanische Wechselwirkung zwischen bewegten und ruhenden Komponenten zu einer plötzlichen Energiefreisetzung kommen, die eine Zerstörung von Bauteilen auslösen kann. Insbesondere die Beschädigung des aus Faserverbundwerkstoff bestehenden Rotors führt zu einer impulsartigen Bildung von Gasen, Staubpartikeln und Festkörperteilen, was einen plötzlichen Druckanstieg im Inneren der Schwungradmaschine zur Folge hat.

Ein Ausdringen solcher Stoffe in weitere Bereiche der über den Vakuumanschluss verbundenen Anlagensysteme ist aus Sicherheitsgründen sowie zum Schutz der Investition zu verhindern. Gase und Festkörper eines zerstörten Rotors würden bei Austritt in das Vakuumsystem mit hoher Wahrscheinlichkeit zum Ausfall der Vakuumpumpe und/oder zur Kontaminierung der Vakuumverrohrung führen. Vielfach werden mehrere Schwungradmaschinen zu einem System mit gemeinsamem Vakuumsystem zusammengefasst. Im Falle eines Fehlers in einer einzelnen Schwungradmaschine besteht dann das Risiko eines Rückstroms solcher Stoffe in die weiteren Schwungradmaschinen, was dort ebenfalls zum Ausfall führen würde und eine Fehlerkaskade innerhalb der Gesamtanlage auslösen könnte.

Die beschriebenen Probleme können bei allen Vakuumsystemen auftreten, die bewegte Teile enthalten.

US 5,704,385 oder US 4,844,113 beschreiben einen seismischen Sicherheitsapparat mit einem seismischen Sicherheitsmechanismus zur Unterbrechung eines Flüssigkeitsflusses beispielsweise in einer Gas- oder Ölpipeline aufgrund einer Vibration oder eines Stoßes. Dazu ist ein Ball in einer Vertiefung auf einer um einen Drehpunkt drehbaren Ventilklappe positioniert, aus der der Ball aufgrund einer Vibration oder eines Stoßes entfernt wird und in eine Position läuft, in der der Ball die Ventilklappe mittels seines Gewichts in eine Verschlussposition drückt und somit die Verschlussklappe den Flüssigkeitsfluss unterbindet.

### Zusammenfassung der Erfindung

Aufgabe der Erfindung ist es daher, ein Sicherheits-Verschlusssystem für ein Vakuumsystem anzugeben, das im Falle eines internen Fehlers das Vakuumsystem sicher verschließt und verschlossen hält. Dabei soll das Sicherheits-Verschlusssystem im offenen Zustand den Leitungsquerschnitt möglichst wenig verkleinern. Der Aufbau des Systems soll möglichst einfach und kostengünstig zu realisieren sein. Zudem soll sich das ausgelöste Sicherheits-Verschlusssystem ohne Öffnen der evakuierten Anlagen- und Maschinenteile zurücksetzen lassen.

Erfindungsgemäß wird diese Aufgabe durch eine Vorrichtung mit den Merkmalen des unabhängigen Anspruchs 1 gelöst. Vorteilhafte Weiterbildungen der Vorrichtung ergeben sich aus den Unteransprüchen 2 bis 11.

Erfindungsgemäß weist das Vakuum-Sicherheits-Verschlusssystem eine Vakuumdurchführung mit s-förmiger Geometrie und eine Verschlussklappe auf, wobei die Verschlussklappe ein ferromagnetisches Kontergewicht aufweist und an einer Lagerstange drehbeweglich befestigt und zwischen einer Offenstellung und einer Geschlossenstellung verschwenkbar ist, wobei in der Offenstellung die Vakuumdurchführung durchgängig ist, während sie in der Geschlossenstellung blockiert ist. Unter normalen Funktionsbedingungen befindet sich die Verschlussklappe in der Offenstellung. Aufgrund der niedrigen Druckverhältnisse herrscht innerhalb der Vakuumdurchführung eine Molekularströmung. Unter diesen Bedingungen ist der Leitwert mit der dritten Potenz proportional zum Leitungsdurchmesser.

In einer vorteilhaften Ausführungsform ist die Lagerstange an einem Auflager so gelagert, dass das Kontergewicht in der Offenstellung an einer Auflagerstelle anliegt, wobei diese Auflagerstelle im Verhältnis zur Lage des Auflagers der Lagerstange in x-Richtung im Wesentlichen senkrecht zur Durchströmungsrichtung der

Vakuumdurchführung an dieser Stelle so weit entfernt ist, dass das Kontergewicht über die Neutralstellung senkrecht über dem Auflager der Lagerstange hinaus verschwenkt ist. Dabei befindet sich der Gesamtschwerpunkt der beweglichen Klappenmechanik oberhalb, in x-Richtung versetzt zum Drehpunkt. Die Hebelwirkung des Kontergewichts sorgt dabei für eine stabile Gleichgewichtslage. Die Verschlussklappe ragt hierbei nur minimal in die Leitungsquerschnittsfläche hinein. Dabei kann die Blendenwirkung vernachlässigt werden. Der Leitungsquerschnitt wird dadurch nur minimal eingeschränkt und der Leitwert der Vorrichtung gegenüber einer Ausführung ohne Verschlussklappe nur minimal beeinflusst.

In einer weiteren vorteilhaften Ausführungsform weist das Vakuum-Sicherheits-Verschlusssystem weiterhin eine Auflagerstelle für die Verschlussklappe in der Geschlossenstellung auf, wobei sich die Auflagerstelle in y-Richtung, das heißt in Richtung der Durchströmung der Vakuumdurchführung an dieser Stelle, im Wesentlichen auf gleicher Höhe wie die Auflagerstelle für die Lagerstange befindet und das Verhältnis der Länge A des Teils der Verschlussklappe von ihrem Drehpunkt bis zum Ende des Kontergewichts zur Länge B des Teils der Verschlussklappe von ihrem Drehpunkt bis zum Ende des Verschlussteils der Verschlussklappe in Abhängigkeit des Gewichts der Verschlussklappe und des Kontergewichts so gewählt ist, dass die Verschlussklappe an der Auflagerstelle anliegt und sich in einem stabilen Gleichgewicht befindet, wenn sie sich in der Geschlossenstellung befindet.

Das Vakuum-Sicherheits-Verschlusssystem weist eine Druckkammer auf, wobei die Druckkammer mit der Vakuumdurchführung verbunden ist und die Verschlussklappe in der Offenstellung die Druckkammer zumindest teilweise abdeckt, ohne sie druckdicht gegenüber der Vakuumdurchführung zu verschließen. Durch die Druckkammer werden auf die Verschlussklappe wirkenden Kräfte weiter verstärkt.

Die Verschlussklappe weist auf ihrer Einlassseite eine Materialausnehmung in ihrer Fläche auf, wobei diese Materialausnehmung so angeordnet ist, dass sie in der Offenstellung beiderseits auf der unteren Kante der Druckkammer liegt. Dabei kann die Materialausnehmung löffelförmig ausgestaltet sein, in dem sie in dem Bereich, der außerhalb der Druckkammer liegt, tiefer in die Fläche der Verschlussklappe hineinragt als in dem Bereich, der der Druckkammer gegenüberliegt. Der Übergang des tiefen Bereichs zum flacheren Bereich ist dabei fließend und die gesamte Kontur mit Radien versehen. Im Falle eines signifikanten Druckanstiegs innerhalb der Maschine bildet sich ein Massestrom aus der Maschine heraus aus, der sich bei ausreichender Flussdichte durch Umlenkung im äußeren Radiusbereich der in y-Richtung gesehen ersten s-förmigen Krümmung der Leitungsquerschnittsfläche konzentriert. Der entweichende Massestrom trifft dabei teilweise auf die innere Kontur der Verschlussklappe, wo sich die Materialausnehmung befindet, und wird in die Druckkammer umgelenkt. Durch die so entstehende Druckdifferenz beiderseits der Verschlussklappe kommt es zu einer Krafteinwirkung auf die Verschlussklappe, wodurch die Verschlussklappe soweit in Richtung Geschlossenstellung um ihren Drehpunkt herum verschwenkt wird, dass das Kontergewicht über die Neutralstellung senkrecht über dem Drehpunkt hinaus ausgelenkt wird. Die gezeigte vorteilhafte Ausführung sieht die geometrische Anordnung von Lagerstelle und Dimension der Klappenmechanik in Kombination und relativer Lage zur Durchführungsgeometrie derart vor, dass sich bei Auslösung des Schließvorgangs der freie Leitungsquerschnitt in Richtung des Massestroms mit zunehmendem Schließwinkel verringert. Durch die Hebelwirkung des Kontergewichts wird dieser Effekt zusätzlich verstärkt. Auch im Falle signifikanter Querbeschleunigungen, beispielsweise bei Schwingungen der Maschine, wird die Verschlussklappe auch ohne Druckanstieg über die beschriebene neutrale Stellung, in der sich das Kontergewicht senkrecht über dem Drehpunkt der Verschlussklappe befindet, hinaus ausgelenkt und das Verschwenken der Verschlussklappe durch die Hebelwirkung des Kontergewichts in die Geschlossenstellung ausgelöst.

In einer weiteren vorteilhaften Ausführungsform ist die Auflagerstelle für die Verschlussklappe in der Geschlossenstellung konisch ausgeführt. Dadurch kommt es in der Geschlossenstellung zu einer linienförmigen Berührung der Verschlussklappe mit ihrem Auflager, so dass die Flächenpressung und somit auch die Dichtwirkung erhöht ist. Wird zusätzlich auch die Kante der Verschlussklappe konisch ausgeführt, kann die Verschlussklappe mit ihrer Auflage in Geschlossenstellung einen Dichtsitz bilden, der die Dichtwirkung weiter erhöht und dabei auch bei häufigem Schließen des Vakuum-Sicherheits-Verschlusssystems wenig Verschleiß zeigt.

Weiterhin hat es sich als vorteilhaft erwiesen, wenn die Verschlussklappe einen ferromagnetischen Werkstoff enthält und das Vakuum-Sicherheits-Verschlusssystem mindestens einen Haltemagneten aufweist, der sich in y-Richtung oberhalb der Auflagerstelle für die Verschlussklappe befindet. Dieser Haltemagnet kann beispielsweise ringförmig ausgebildet sein. Während des Verschwenkens der Verschlussklappe von der Offenstellung in die Geschlossenstellung wird die ferromagnetische Verschlussklappe durch die Anordnung des Haltemagnets in eine definierte Verschlusslage gebracht und gehalten. Dadurch können die Anforderungen an die Fertigungsgenauigkeit der Auflager- und Verschlussklappenflächen, der Lagerstange und des Auflagers für die Lagerstange verringert werden. Zudem erhöht die Anordnung des Haltemagneten die Verschlusskraft zusätzlich, was beispielsweise bei Umkehrung der Druckverhältnisse vorteilhaft ist.

Als Haltemagnet können alle bekannten Magnete, wie Elektromagnete oder Permanentmagnete, eingesetzt werden. Ein Permanentmagnet bietet den Vorteil, auch bei einem Stromausfall die Haltekraft wie oben beschrieben zu erhöhen.

In einer weiteren vorteilhaften Ausführungsform weist das Vakuum-Sicherheits-Verschlusssystem eine Ausnehmung in y-Richtung, das heißt in Richtung der Durchströmung durch die Vakuumdurchführung, oberhalb des Haltemagneten auf, in der der Haltemagnet bewegbar gelagert ist. Die Geschlossenstellung lässt sich dann durch Lageveränderung des Haltemagneten zurücksetzen. Dabei wird die auf die ferromagnetische Verschlussklapppe aufgebrachte magnetische Kraft verringert. Dieses Verfahren eignet sich auch, wenn ein Permanentmagnet als Haltemagnet eingesetzt ist. Gleichzeitig kann beispielsweise über ein äußeres Magnetfeld das Kontergewicht angehoben werden, so dass die Verschlussklappe um ihren Drehpunkt herum in die Offenstellung verschwenkt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

### Kurze Beschreibung der Abbildungen

Von den Abbildungen zeigt:
- Fig. 1: die erfindungsgemäße Vorrichtung, bei der sich die Verschlussklappe in der Offenstellung befindet.
- Fig. 2: die erfindungsgemäße Vorrichtung, bei der sich die Verschlussklappe in der Geschlossenstellung befindet.
- Fig. 3: Einzelheit Z aus Fig. 1
- Fig. 4: Einzelheit W aus Fig. 3
- Fig. 5: die Verschlussklappe

### Detailierte Beschreibung der Ausführungsbeispiele

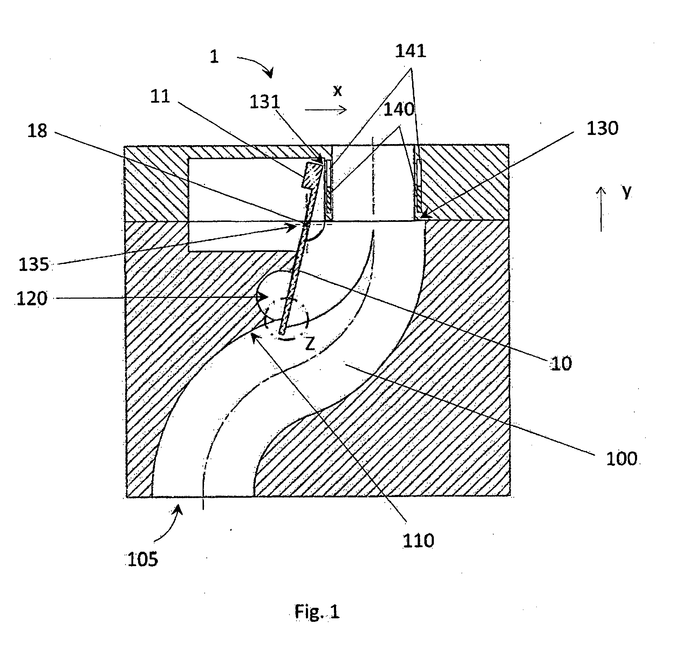

Fig. 1 zeigt das erfindungsgemäße Vakuum-Sicherheits-Verschlusssystem 1, wobei sich die Verschlussklappe 10 in der Offenstellung befindet. Das Vakuum-Sicherheits-Verschlusssystem 1 weist eine Vakuumdurchführung 100 mit s-förmiger Geometrie auf. An einem Ende des Vakuum-Sicherheits-Verschlusssystems 1 befindet sich die Einlassöffnung 105, während sich an dem gegenüberliegenden Ende die Verschlussklappe 10 befindet. Weiterhin weist das Vakuum-Sicherheits-Verschlusssystem 1 eine Druckkammer 120 auf. Die Verschlussklappe 10 befindet sich in Offenstellung, wobei sie die Druckkammer 120 zumindest teilweise abdeckt, ohne sie druckdicht gegenüber der Vakuumdurchführung 100 zu verschließen. Die Verschlussklappe 10 selbst weist ein ferromagnetisches Kontergewicht 11 auf und ist an einer Lagerstange 18 drehbeweglich befestigt. Die Verschlussklappe 10 ist zwischen einer Offenstellung und einer Geschlossenstellung verschwenkbar. In der in der Figur gezeigten Offenstellung ist die Vakuumdurchführung 100 durchgängig. Die Druckkammer 120 ist mit der Vakuumdurchführung 100 verbunden. Weiterhin weist das Vakuum-Sicherheits-Verschlusssystem 1 mindestens einen Haltemagneten 140 auf, der sich in y-Richtung, das heißt in Richtung der Durchströmung der Vakuumdurchführung, oberhalb der Auflagerstelle 130 für die Verschlussklappe 10 befindet. Dieser Haltemagnet 140 kann beispielsweise ringförmig ausgebildet sein. Die Verschlussklappe 10 enthält einen ferromagnetischen Werkstoff. Als Haltemagnet 140 können alle bekannten Magnete, wie Elektromagnete oder Permanentmagnete, eingesetzt werden.

Unter normalen Funktionsbedingungen befindet sich die Verschlussklappe 10 in der gezeigten Offenstellung. Aufgrund der niedrigen Druckverhältnisse herrscht innerhalb der Vakuumdurchführung 100 eine Molekularströmung. Unter diesen Bedingungen ist der Leitwert mit der dritten Potenz proportional zum Leitungsdurchmesser.

Die Lagerstange 18 ist an einem Auflager 135 so gelagert, dass das Kontergewicht 11 in der Offenstellung an einer Auflagerstelle 131 anliegt, wobei diese Auflagerstelle 131 im Verhältnis zur Lage des Auflagers 135 der Lagerstange 18 in x-Richtung, das heißt in einer Richtung im Wesentlichen senkrecht zur Richtung der Durchströmung durch die Vakuumdurchführung an dieser Stelle, so weit entfernt ist, dass das Kontergewicht 11 über die Neutralstellung senkrecht über dem Auflager 135 der Lagerstange 18 hinaus verschwenkt ist. Durch die Hebelwirkung des Kontergewichts 18 befindet sich die Verschlussklappe 10 so in einer stabilen Gleichgewichtslage und ragt nur minimal in die Leitungsquerschnittsfläche der Vakuumdurchführung 100 hinein. Dabei kann die Blendenwirkung vernachlässigt werden. Der Leitungsquerschnitt der Vakuumdurchführung 100 wird dadurch nur minimal eingeschränkt und der Leitwert der Vorrichtung gegenüber einer Ausführung ohne Verschlussklappe 10 nur minimal beeinflusst.

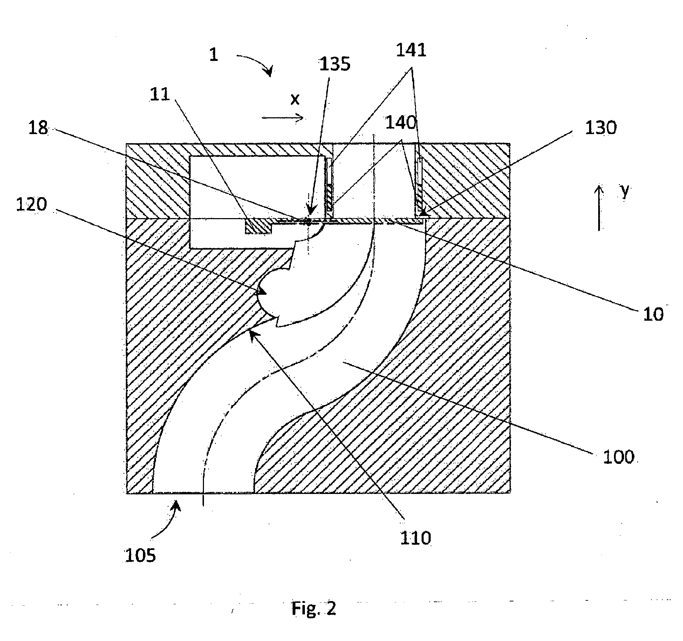

Fig. 2 zeigt das erfindungsgemäße Vakuum-Sicherheits-Verschlusssystem 1, wobei sich die Verschlussklappe 10 in der Geschlossenstellung befindet. Das Vakuum-Sicherheits-Verschlusssystem 1 weist eine Auflagerstelle 130 für die Verschlussklappe 10 in der Geschlossenstellung auf, wobei sich die Auflagerstelle 130 in y-Richtung im Wesentlichen auf gleicher Höhe wie die Auflagerstelle 135 für die Lagerstange 18 befindet und das Verhältnis der Länge des Teils der Verschlussklappe 10 von ihrem Drehpunkt 12 bis zum Ende des Kontergewichts 11 zur Länge des Teils der Verschlussklappe 10 von ihrem Drehpunkt 12 bis zum Ende des Verschlussteils der Verschlussklappe 10 in Abhängigkeit des Gewichts der Verschlussklappe 10 und des Kontergewichts 11 so gewählt ist, dass die Verschlussklappe 10 in der Geschlossenstellung an der Auflagerstelle 130 anliegt und sich in einem stabilen Gleichgewicht befindet. In dieser Stellung ist der Durchgang durch die Vakuumdurchführung 100 durch die Verschlussklappe 10 blockiert.

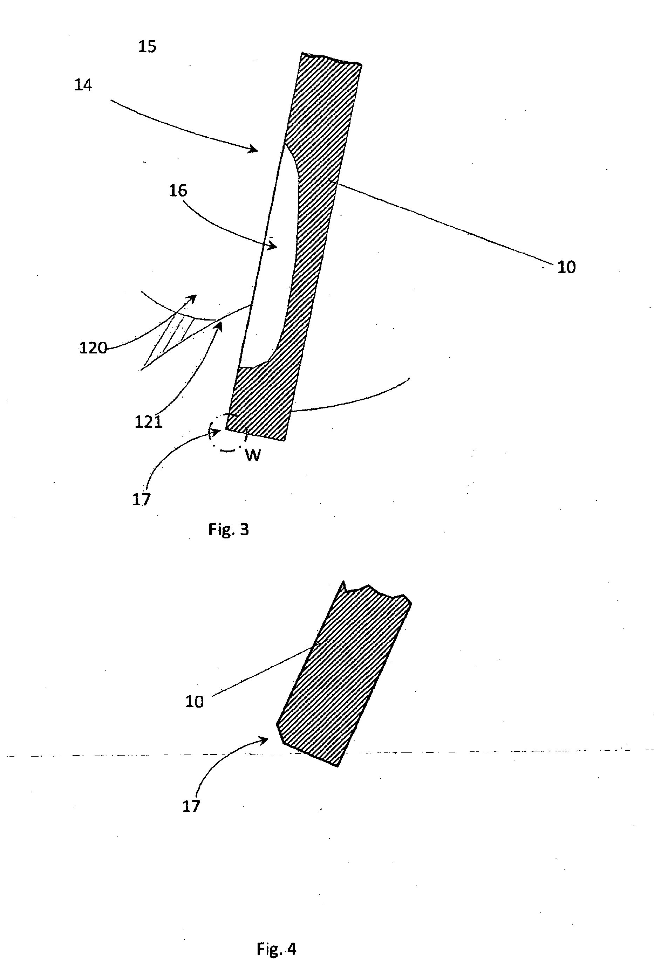

Fig. 3 zeigt die Einzelheit Z aus Fig. 1. Dabei handelt es sich um eine Materialausnehmung 16 aus der Fläche 15 auf der Einlassseite 14 der Verschlussklappe 10. Die Materialausnehmung 16 ist dabei so angeordnet, dass sie in der Offenstellung beiderseits der unteren Kante 121 der Druckkammer 120 liegt. Im Falle eines signifikanten Druckanstiegs innerhalb der Schwungradmaschine bildet sich ein Massestrom aus der Maschine heraus durch die Vakuumdurchführung 100 aus, der sich bei hoher Flussdichte durch Umlenkung im äußeren Radiusbereich der in y-Richtung gesehen ersten s-förmigen Krümmung der Leitungsquerschnittsfläche der Vakuumdurchführung, das heißt in dem in den Fig. 1 und 2 mit Bezugszeichen 110 gekennzeichneten Bereich, konzentriert. Der Massestrom des entweichenden Gasvolumens trifft dabei teilweise auf die innere Kontur der Verschlussklappe 10, wo sich die Materialausnehmung 16 befindet, und wird teilweise in die Druckkammer 120 umgelenkt. Durch die so entstehende Druckdifferenz beiderseits der Verschlussklappe 10 kommt es zu einer Krafteinwirkung auf die Verschlussklappe10, wodurch die Verschlussklappe 10 soweit in Richtung Geschlossenstellung um ihren Drehpunkt 12 herum verschwenkt wird, dass das Kontergewicht 11 über die Neutralstellung senkrecht über dem Drehpunkt 12 hinaus ausgelenkt wird. Durch den verstärkenden Schließeffekt des Massestroms sowie die Hebelwirkung des Kontergewichts 11 fällt die Verschlussklappe 10 in ihre stabile Geschlossenstellung. Durch eine löffelförmige Ausgestaltung der Materialausnehmung 16, bei dem sie in dem Bereich, der außerhalb der Druckkammer 120 liegt, tiefer in die Fläche 15 der Einlassseite 14 der Verschlussklappe 10 hineinragt als in dem Bereich, der der Druckkammer 120 gegenüberliegt, und einem fließenden Übergang des tiefen Bereichs zum flacheren Bereich lässt sich die Umlenkung des steigenden Drucks in die Druckkammer 120 verstärken. Ein gleichsinniger Effekt lässt sich dadurch erreichen, dass die gesamte innere Kontur der Materialausnehmung 16 mit Radien versehen wird.

Auch im Falle signifikanter Querbeschleunigungen, beispielsweise bei Schwingungen der Schwungradmaschine, wird die Verschlussklappe 10 auch ohne Druckanstieg über die beschriebene neutrale Stellung, in der sich das Kontergewicht 11 senkrecht über dem Drehpunkt 12 der Verschlussklappe 10 befindet, hinaus ausgelenkt und die Verschwenkung der Verschlussklappe 10 in die Geschlossenstellung ausgelöst. Das Vakuum-Sicherheits-Verschlusssystem 1 weist eine Ausnehmung 141 in y-Richtung oberhalb des Haltemagneten 140 auf, in der der Haltemagnet 140 bewegbar gelagert ist. Die Geschlossenstellung lässt sich dann durch Lageveränderung des Haltemagneten 140 zurücksetzen. Dabei wird die auf die ferromagnetische Verschlussklappe 10 aufgebrachte magnetische Kraft verringert. Dieses Verfahren eignet sich auch, wenn ein Permanentmagnet als Haltemagnet 140 eingesetzt ist. Gleichzeitig kann beispielsweise über das äußere Magnetfeld das Kontergewicht 11 angehoben werden, so dass die Verschlussklappe 10 um ihren Drehpunkt 12 herum in die Offenstellung verschwenkt.

Während des Verschwenkens der Verschlussklappe 10 von der Offenstellung in die Geschlossenstellung wird die ferromagnetische Verschlussklappe 10 durch die Anordnung des Haltemagnets 140 in eine definierte Verschlusslage gebracht und gehalten. Dadurch können die Anforderungen an die Fertigungsgenauigkeit der Flächen der Auflager 130, 135 und der Verschlussklappe 10 verringert werden. Zudem erhöht die Anordnung des Haltemagneten 140 die Verschlusskraft zusätzlich zu der Hebelwirkung des Kontergewichts 11, was beispielsweise bei Umkehrung der Druckverhältnisse vorteilhaft ist.

Die Auflagerstelle 130 für die Verschlussklappe 10 in der Geschlossenstellung kann konisch ausgeführt sein. Dadurch kommt es in der Geschlossenstellung zu einer linienförmigen Berührung der Verschlussklappe 10 mit ihrem Auflager 130, so dass die Flächenpressung und somit auch die Dichtwirkung erhöht ist.

Fig. 4 zeigt die Einzelheit W aus Fig. 3. Die Kante 17 der Verschlussklappe 10 ist hierin ebenfalls konisch ausgeführt. In dieser Ausführungsform kann die Verschlussklappe 10 mit ihrer konischen Auflage 130 in Geschlossenstellung einen Dichtsitz bilden, der die Dichtwirkung weiter erhöht und dabei auch bei häufigem Schließen des Vakuum-Sicherheits-Verschlusssystems 1 wenig Verschleiß zeigt.

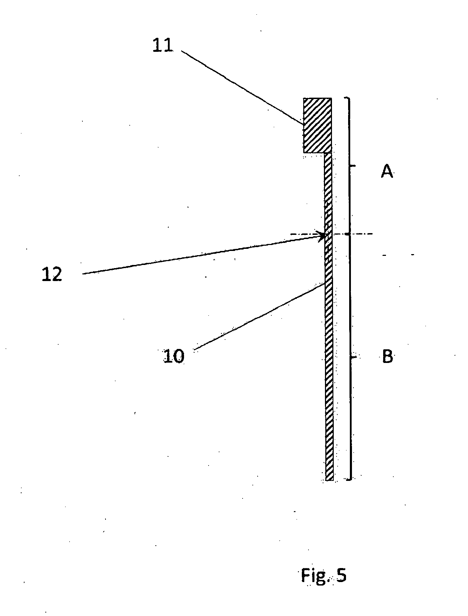

Fig. 5 zeigt die Verschlussklappe 10. Die Verschlussklappe 10 weist einen ersten Teil mit einer Länge A von ihrem Drehpunkt 12 bis zum Ende des Kontergewichts 11 und einen zweiten Teil mit einer Länge B von ihrem Drehpunkt 12 bis zum Ende des Verschlussteils der Verschlussklappe 10 auf.

### Bezugszeichenliste:

- 1: Vakuum-Sicherheits-Verschlusssystem
- 10: Verschlussklappe
- 11: Kontergewicht
- 12: Drehpunkt
- 14: Einlassseite
- 15: Fläche
- 16: Materialausnehmung
- 17: Kante
- 18: Lagerstange
- 100: Vakuumdurchführung
- 105: Einlassöffnung
- 110: Bereich ii
- 120: Druckkammer
- 121: untere Kante
- 130: Auflagerstelle für Verschlussklappe
- 131: Auflagerstelle für Kontergewicht
- 135: Auflager für Lagerstange
- 140: Haltemagnet
- 141: Ausnehmung
- A: Länge des Verschlussklappenteils von Drehpunkt bis Ende des Kontergewichts
- B: Länge des Verschlussklappenteils von Drehpunkt bis Ende des Verschlussteils

## Patentansprüche

1. Vakuum-Sicherheits-Verschlusssystem (1), das eine Vakuumdurchführung (100) und eine Verschlussklappe (10) aufweist, wobei die Verschlussklappe (10) ein ferromagnetisches Kontergewicht (11) aufweist und an einer Lagerstange (18) drehbeweglich befestigt und zwischen einer Offenstellung und einer Geschlossenstellung verschwenkbar ist, wobei in der Offenstellung die Vakuumdurchführung (100) durchgängig ist, während sie in der Geschlossenstellung blockiert ist, und das Vakuum-Sicherheits-Verschlusssystem (1) eine Druckkammer (120) aufweist, wobei die Druckkammer (120) mit der Vakuumdurchführung (100) verbunden ist und die Verschlussklappe (10) in der Offenstellung die Druckkammer (120) zumindest teilweise abdeckt, ohne sie druckdicht gegenüber der Vakuumdurchführung (100) zu verschließen
**dadurch gekennzeichnet, dass**
die Verschlussklappe (10) auf ihrer Einlassseite (14) eine Materialausnehmung (16) in ihrer Fläche (15) aufweist, wobei diese Materialausnehmung (15) so angeordnet ist, dass sie in der Offenstellung beiderseits der unteren Kante (121) der Druckkammer (120) liegt und der unteren Kante (121) zugewandt ist.

2. Vakuum-Sicherheits-Verschlusssystem (1) nach Anspruch 1,
**dadurch gekennzeichnet,**
**dass** die Lagerstange an einem Auflager (135) gelagert ist, und das Kontergewicht (11) in der Offenstellung an einer Auflagerstelle (131) anliegt, wobei die Auflagerstelle (131) im Verhältnis zur Lage des Auflagers (135) der Lagerstange (18) in x-Richtung, das heißt im Wesentlichen senkrecht zur Durchströmungsrichtung der Vakuumdurchführung (100), so weit entfernt ist, dass das Kontergewicht (11) über die Neutralstellung senkrecht über dem Auflager der Lagerstange (18) hinaus verschwenkt ist.

3. Vakuum-Sicherheits-Verschlusssystem (1) nach Anspruch 1 oder 2,
**dadurch gekennzeichnet,**
**dass** das Vakuum-Sicherheits-Verschlusssystem (1) weiterhin eine Auflagerstelle (130) für die Verschlussklappe in der Geschlossenstellung aufweist, wobei die Auflagerstelle (130) sich in y-Richtung, das heißt in Richtung der Durchströmung der Vakuumdurchführung (100), im Wesentlichen auf gleicher Höhe wie die Auflagerstelle (135) für die Lagerstange (18) befindet und das Verhältnis der Länge A des Teils der Verschlussklappe (10) von Drehpunkt (12) bis Ende des Kontergewichts (11) zur Länge B des Teils der Verschlussklappe (10) von Drehpunkt (12) bis Ende des Verschlussteils der Verschlussklappe (10) in Abhängigkeit des Gewichts der Verschlussklappe (10) und des Kontergewichts (11) so gewählt ist, dass die Verschlussklappe (10) in der Geschlossenstellung an der Auflagerstelle (130) anliegt.

4. Vakuum-Sicherheits-Verschlusssystem (1) nach einem der vorherigen Ansprüche,
**dadurch gekennzeichnet,**
**dass** die Materialausnehmung (16) löffelförmig ausgestaltet ist, wobei sie in dem Bereich, der außerhalb der Druckkammer (120) liegt, tiefer in die Fläche (15) der Einlassseite (14) der Verschlussklappe (10) hineinragt als in dem Bereich, der der Druckkammer (120) gegenüberliegt, und einen fließenden Übergang des tiefen Bereichs zum flacheren Bereich aufweist.

5. Vakuum-Sicherheits-Verschlusssystem (1) nach Anspruch 4,
**dadurch gekennzeichnet,**
**dass** die Kontur der Materialausnehmung (16) in der Fläche (15) der Verschlussklappe (10) mit Radien versehen ist.

6. Vakuum-Sicherheits-Verschlusssystem (1) nach Anspruch 3,
**dadurch gekennzeichnet,**
**dass** die Auflagerstelle (130) für die Verschlussklappe (10) konisch ausgeführt ist.

7. Vakuum-Sicherheits-Verschlusssystem (1) nach Anspruch 6,
**dadurch gekennzeichnet,**
**dass** die Kante (17) der Verschlussklappe (10) konisch ausgeführt ist.

8. Vakuum-Sicherheits-Verschlusssystem (1) nach Anspruch 7,
**dadurch gekennzeichnet,**
**dass** die konische Kante (17) der Verschlussklappe (10) mit der konisch ausgeführten Auflagerstelle (130) einen Dichtsitz bildet.

9. Vakuum-Sicherheits-Verschlusssystem (1) nach einem der Ansprüche 3, 6, 7 oder 8,
**dadurch gekennzeichnet,**
**dass** die Verschlussklappe (10) einen ferromagnetischen Werkstoff enthält und das Vakuum-Sicherheits-Verschlusssystem (1) mindestens einen Haltemagneten (140) aufweist, der sich in y-Richtung oberhalb der Auflagerstelle (130) für die Verschlussklappe (10) befindet.

10. Vakuum-Sicherheits-Verschlusssystem (1) Anspruch 9,
**dadurch gekennzeichnet,**
**dass** der Haltemagnet (140) ein Permanentmagnet ist.

11. Vakuum-Sicherheits-Verschlusssystem (1) nach einem der Ansprüche 9 oder 10,
**dadurch gekennzeichnet,**
**dass** das Vakuum-Sicherheits-Verschlusssystem (1) eine Ausnehmung (141) in y-Richtung oberhalb der Verschlussklappe (10) aufweist, in der der Haltemagnet (140) bewegbar gelagert ist.

## Claims

1. A vacuum safety-closure system (1) having a vacuum conduit (100) and a closure flap (10), whereby the closure flap (10) has a ferromagnetic counterweight (11) and is pivotably attached to a bearing rod (18) and can swivel between an open position and a closed position, whereby the vacuum conduit (100) is unblocked in the open position whereas it is blocked in the closed position, and the vacuum safety-closure system (1) has a pressure chamber (120), whereby the pressure chamber (120) is connected to the vacuum conduit (100) and, when the closure flap (10) is in the open position, it at least partially covers the pressure chamber (120) without sealing it pressure-tight vis-à-vis the vacuum conduit (100),
**characterized In that**
the inlet side (14) of the closure flap (10) has a recess (16) in the surface (15) of the material, whereby this recess (16) in the material is arranged in such a way that, when the flap is in the open position, the recess (16) in the material is situated on both sides of the lower edge (121) of the pressure chamber (120) and faces the lower edge (121).

2. The vacuum safety-closure system (1) according to claim 1,
**characterized in that**
the bearing rod is mounted on a support (135), and, when the flap is in the open position, the counterweight (11) is in contact with a support point (131), whereby the support point (131) is at such a distance relative to the position of the support (135) of the bearing rod (18) in the x-direction - that is to say, essentially perpendicular to the through-flow direction of the vacuum conduit (100) - that the counterweight (11) is swiveled perpendicular above the support of the bearing rod (18) beyond the neutral position.

3. The vacuum safety-closure system (1) according to claim 1 or 2,
**characterized in that**
the vacuum safety-closure system (1) also has a support point (130) for the closure flap in the closed position, whereby the support point (130) is essentially at the same height as the support point (135) for the bearing rod (18) in the y-direction, that is to say, in the through-flow direction of the vacuum conduit (100), and the ratio of the length A of the part of the closure flap (10) - from the fulcrum (12) to the end of the counterweight (11) - to the length B of the part of the closure flap (10) - from the fulcrum (12) to the end of the closure part of the closure flap (10) - is selected as a function of the weight of the closure flap (10) and of the counterweight (11) in such a way that, when the closure flap (10) is in the closed position, it is in contact with the support point (130).

4. The vacuum safety-closure system (1) according to one of the preceding claim,
**characterized in that**
the recess (16) in the material is configured to be spoon-shaped, whereby, in the area that is outside of the pressure chamber (120), it extends deeper into the surface (15) of the inlet side (14) of the closure flap (10) than in the area that is opposite from the pressure chamber (120), and it has a smooth transition from the deep area to the flatter area.

5. The vacuum safety-closure system (1) according to claim 4,
**characterized in that**
the contour of the recess (16) in the surface (15) of the material of the closure flap is provided with radii.

6. The vacuum safety-closure system (1) according to claim 3,
**characterized in that**
the support point (130) for the closure flap (10) has a conical shape.

7. The vacuum safety-closure system (1) according to claim 6,
**characterized in that**
the edge (17) of the closure flap (10) has a conical shape.

8. The vacuum safety-closure system (1) according to claim 7,
**characterized in that**
the conical edge (17) of the closure flap (10) having the conically shaped support point (130) forms a sealing seat.

9. The vacuum safety-closure system (1) according to one of claims 3, 6, 7 or 8,
**characterized in that**
the closure flap (10) contains a ferromagnetic material and the vacuum safety-closure system (1) has at least one holding magnet (140) that is located above the support point (130) for the closure flap (10) in the y-direction.

10. The vacuum safety-closure system (1) according to claim 9,
**characterized in that**
the holding magnet (140) is a permanent magnet.

11. The vacuum safety-closure system (1) according to claim 9 or 10,
**characterized in that**
the vacuum safety-closure system (1) has a recess (141) above the closure flap (10) in which the holding magnet (140) is movably mounted in the y-direction.

## Revendications

1. Système de fermeture de sécurité sous vide (1) présentant un passage sous vide (100) et un clapet de fermeture (10), le clapet de fermeture (10) présentant un contrepoids ferromagnétique (11) et étant fixé de manière mobile en rotation sur une tige de palier (18) et pouvant pivoter entre une position d'ouverture et une position de fermeture, le passage sous vide (100) étant continu en position d'ouverture, tandis qu'il est bloqué en position de fermeture, et le système de fermeture de sécurité sous vide (1) comportant une chambre de pression (120), la chambre de pression (120) étant reliée au passage sous vide (100) et le clapet de fermeture (10), dans la position d'ouverture, recouvrant au moins en partie la chambre de pression (120) sans la fermer de manière étanche à la pression par rapport au passage sous vide (100),
**caractérisé en ce que**
le clapet de fermeture (10) présente, sur son côté d'admission (14), un évidement de matière (16) dans sa surface (15), cet évidement de matière (16) étant agencé de manière telle qu'il se trouve, en position ouverte, de part et d'autre du bord inférieur (121) de la chambre de pression (120) et est tourné vers le bord inférieur (121).

2. Système de fermeture de sécurité sous vide (1) selon la revendication 1, **caractérisé en ce que** la tige de palier est logée sur un appui (135) et **en ce que** le contrepoids (11), dans la position d'ouverture, est appliqué contre un point d'appui (131), le point d'appui (131) étant, par rapport à la position de l'appui (135) de la tige de palier (18) dans la direction x, c'est-à-dire sensiblement verticalement par rapport au sens de l'écoulement du passage sous vide (100), à une distance telle que le contrepoids (11) est pivoté au-delà du point neutre verticalement au-dessus de l'appui de la tige de palier (18).

3. Système de fermeture de sécurité sous vide (1) selon la revendication 1 ou 2, **caractérisé en ce que** le système de fermeture de sécurité sous vide (1) comporte en outre un point d'appui (130) pour le clapet de fermeture dans la position de fermeture, le point d'appui (130) se trouvant, dans la direction y, c'est-à-dire dans le sens de l'écoulement du passage sous vide (100), sensiblement à la même hauteur que le point d'appui (135) pour la tige de palier (18), et le rapport entre la longueur A de la partie du clapet de fermeture (10) du point de pivotement (12) jusqu'à l'extrémité du contrepoids (11) et la longueur B de la partie du clapet de fermeture (10) du point de pivotement (12) à l'extrémité de la partie de fermeture du clapet de fermeture (10) étant choisi de manière telle, en fonction du poids du clapet de fermeture (10) et du contrepoids (11), que le clapet de fermeture (10), dans la position de fermeture, est appliqué contre le point d'appui (130).

4. Système de fermeture de sécurité sous vide (1) selon l'une des revendications précédentes, **caractérisé en ce que** l'évidement de matière (16) est réalisé en forme de cuiller, l'évidement, dans la zone située en dehors de la chambre de pression (120), faisant saillie dans la surface (15) du côté d'admission (14) du clapet de fermeture (10) plus profondément que dans la zone située vis-à-vis de la chambre de pression (120), et présentant un passage continu de la zone profonde à la zone moins profonde.

5. Système de fermeture de sécurité sous vide (1) selon la revendication 4, **caractérisé en ce que** le contour de l'évidement de matière (16) dans la surface (15) du clapet de fermeture (10) est pourvu de rayons.

6. Système de fermeture de sécurité sous vide (1) selon la revendication 3, **caractérisé en ce que** le point d'appui (130) pour le clapet de fermeture (10) est réalisé sous forme conique.

7. Système de fermeture de sécurité sous vide (1) selon la revendication 6, **caractérisé en ce que** le bord (17) du clapet de fermeture (10) est réalisé sous forme conique.

8. Système de fermeture de sécurité sous vide (1) selon la revendication 7, **caractérisé en ce que** le bord conique (17) du clapet de fermeture (10) forme un siège d'étanchéité avec le point d'appui (130) réalisé sous forme conique.

9. Système de fermeture de sécurité sous vide (1) selon l'une des revendications 3, 6, 7 ou 8, **caractérisé en ce que** le clapet de fermeture (10) contient un matériau ferromagnétique et **en ce que** le système de fermeture de sécurité sous vide (1) comporte au moins un aimant de retenue (140) qui se trouve dans la direction y au-dessus du point d'appui (130) pour le clapet de fermeture (10).

10. Système de fermeture de sécurité sous vide (1) selon la revendication 9, **caractérisé en ce que** l'aimant de retenue (140) est un aimant permanent.

11. Système de fermeture de sécurité sous vide (1) selon l'une des revendications 9 ou 10, **caractérisé en ce que** le système de fermeture de sécurité sous vide (1) présente, dans la direction y au-dessus du clapet de fermeture (10), un évidement (141) dans lequel l'aimant de retenue (140) est logé mobile.
